# EUROPÄISCHE PATENTSCHRIFT

(11) **EP 3 296 715 B1**
(45) Veröffentlichungstag und Bekanntmachung des Hinweises auf die Patenterteilung: **04.09.2019**
(21) Anmeldenummer: 17191230.6
(22) Anmeldetag: 15.09.2017
(51) Int. Cl.: G01M 5/00, G01M 7/02, F03D 17/00, F03D 13/30

(54) **VERFAHREN ZUR GEWINNUNG VON DATEN ZU EINEM ROTORBLATT FÜR EINE WINDENERGIEANLAGE**
METHOD FOR GENERATING DATA FOR A ROTOR BLADE FOR A WIND TURBINE
PROCÉDÉ D'ACQUISITION DE DONNÉES CONCERNANT UNE PALE DE ROTOR POUR UNE ÉOLIENNE

(30) Priorität: 19.09.2016 DE 102016117647
(43) Veröffentlichungstag der Anmeldung: 21.03.2018
(73) Patentinhaber: Deutsches Zentrum für Luft- und Raumfahrt e.V., 51147 Köln (DE)
(72) Erfinder: Govers, Dr.-Ing. Yves, 37083 Göttingen (DE)
(74) Vertreter: REHBERG HÜPPE + PARTNER

(56) Entgegenhaltungen:
- WO-A1-2008/145727
- WO-A2-2010/000711

## Beschreibung

### TECHNISCHES GEBIET DER ERFINDUNG

Die Erfindung bezieht sich auf ein Verfahren zur Gewinnung von Daten zu einem Rotorblatt für eine Windenergieanlage. Insbesondere geht es darum, Daten zu einem Prototypen zu gewinnen, die eine Aussage über seine Eignung als Muster für ein Rotorblatt für eine Windenergieanlage zulassen.

### STAND DER TECHNIK

Es gibt bislang kein förmliches Zulassungsverfahren für die Rotorblätter von Windenergieanlagen. Die Betreiber von Windenergieanlagen legen jedoch Wert darauf, von den Herstellern von Windenergieanlagen Nachweise über die Eignung deren Rotorblätter zu erhalten. Daher werden Prototypen für Rotorblätter Tests unterzogen, um diese Eignung zu belegen.

Aus der BINE-Projektinfo 15/2011 "Die Zeitmaschine für Rotorblätter" ist es bekannt, dass Tests für Prototypen von Rotorblättern einen statischen Test und einen dynamischen Belastungstest umfassen. In dem statischen Test wird das an seiner Blattwurzel eingespannte Rotorblatt für begrenzte Zeit von zehn Sekunden einer Extremlast ausgesetzt. Dazu wird das von seinem Einspannpunkt ausragende Rotorblatt mit mehreren so genannten Lastscheren umklammert, an denen Stahlseile andocken. Diese Stahlseile werden beispielsweise mit Hydraulikzylindern oder Winden nach unten gezogen. Beschleunigungsaufnehmer und Dehnungsmessstreifen zwischen Rotorblatt und Stahlseilen messen die Kraftaufbringung. In dem dynamischen Belastungstest, einem Dauerschwingtest, wird die Ermüdigungsfestigkeit der Struktur unter so genannter zyklischer oder dynamischer Belastung überprüft. Das jeweilige Rotorblatt mit eingespannter Blattwurzel wird mittels eines auf dem Blatt montierten Elektromotors, auf dessen Welle sich ein exzentrisch angebrachtes Gewicht befindet, oder mittels einer Hubhydraulik in Schwingung bei seiner Eigenfrequenz versetzt. Bei einachsigen oder uniaxialen Dauerschwingtests wird das Rotorblatt in vertikaler als auch in horizontaler Richtung, also in Schlagrichtung und in Schwenkrichtung, separat belastet. Bei zweiachsigen oder biaxialen Dauerschwingtests wird das Rotorblatt gleichzeitig in Schlag- und Schwenkrichtung angeregt. Beginnende Schäden zeigen sich oft schon durch die Veränderung des Schwingungsverhaltens. Über die Breitseite des Blattprofils wird es fünfmillionenmal zyklisch gebogen. Ein solcher Volltest dauert drei Monate. Bei den bekannten dynamischen Belastungstests werden die Merkmale des Oberbegriffs des unabhängigen Patentanspruchs 1 realisiert.

Aus der DE 20 2011 001 901 U1 ist eine Vorrichtung zur Schwingungsanregung von Rotorblättern mit einem an dem jeweiligen Rotorblatt befestigbaren Halter bekannt. Der Halter weist mindestens einen elektrodynamischen Massenaktor auf, der von einer Steuereinrichtung angesteuert wird. Die Vorrichtung weist zusätzlich einen Bewegungssensor auf, der räumliche Bewegungen eines Rotorblattquerschnitts erfasst. Eine bevorzugte Ansteuerung des Massenaktors mit der Steuereinrichtung erfolgt so, dass sich die Massen des Massenaktors mit einer Resonanzfrequenz des Rotorblatts bewegen. In einer anderen Ausführung der Ansteuerung mit der Steuereinrichtung werden die Massen in einer sinusförmigen Bewegung mit langsam steigender Frequenz bewegt. Aus den Messsignalen des Bewegungssensors lassen sich dann die Eigenfrequenzen und weitere modale Parameter des Rotorblatts bestimmen. Es können auch mehrere derartige Vorrichtungen entlang der Längsachse des Rotorblatts angeordnet sein.

Aus der US 2006/0037402 A1 ist ein Resonanztestsystem zum Testen eines Rotorblatts einer Windkraftanlage bekannt. Ein resonantes Aktuatorsystem wird bei einer festen Frequenz betrieben, die so ausgewählt ist, dass sie ungefähr einer Resonanzfrequenz des Rotorblatts entspricht. Dabei kann die Frequenz, mit der das resonante Aktuatorsystem betrieben wird, während eines Tests variiert werden.

Aus der US 2010/0175480 A1 und der zu derselben Patentfamilie gehörigen WO 2008/145727 A1 ist eine Ermüdungstestvorrichtung für Rotorblätter für Windkraftanlagen bekannt. Dabei variiert ein Steuersystem eine Frequenz, bei der das jeweilige Rotorblatt zu Schwingungen angeregt wird, um eine Schätzung einer Eigenfrequenz des Rotorblatts. Abhängig von den erfassten Amplituden der resultierenden Schwingungen des Rotorblatts wird die geschätzte Eigenfrequenz auf die Frequenz aktualisiert, bei der sich die größte Amplitude ergibt. Auf diese Weise wird die Frequenz bei variierenden Bedingungen automatisch der effizientesten Anregungsfrequenz nachgeführt.

Aus der US 2011/0179884 A1 und der zu derselben Patentfamilie gehörigen WO 2010/000711 A2 ist ein Verfahren zum Testen eines Rotorblatts einer Windkraftanlage bekannt, das die Merkmale des Oberbegriffs des unabhängigen Patentanspruchs 1 aufweist. Das Verfahren weist das Befestigen des Rotorblatts an seiner Blattwurzel auf. Das Blatt wird mit einer sinusförmigen Kraftanregung beaufschlagt. Die Frequenz der sinusförmigen Kraft wird wiederholt moduliert und nachfolgend wird die Anregungsfrequenz während eines Tests aktualisiert, um Änderungen der Eigenfrequenz des Rotorblatts zu berücksichtigen, die während einer langen Testdauer auftreten.

### AUFGABE DER ERFINDUNG

Der Erfindung liegt die Aufgabe zugrunde, ein Verfahren mit den Merkmalen des Oberbegriffs des unabhängigen Patentanspruchs 1 aufzuzeigen, bei dem ohne großen zusätzlichen Aufwand zusätzliche aussagekräftige Daten zu dem Rotorblatt gewonnen werden.

### LÖSUNG

Die Aufgabe der Erfindung wird durch ein Verfahren mit den Merkmalen des unabhängigen Patentanspruchs 1 gelöst. Die abhängigen Patentansprüche sind auf bevorzugte Ausführungsformen des erfindungsgemäßen Verfahrens gerichtet.

### BESCHREIBUNG DER ERFINDUNG

Das erfindungsgemäße Verfahren geht aus von einem Dauerschwingtest, für den ein zu testendes Rotorblatt für eine Windenergieanlage an seiner Blattwurzel eingespannt und dann mit einer vorgegebenen Frequenz zu Schwingungen angeregt wird, die auf eine Eigenfrequenz des Rotorblatts eingestellt wird, indem sie diese Eigenfrequenz genau trifft oder hiervon gezielt um wenige Prozent, d. h. maximal zehn Prozent, meistens nicht mehr als fünf Prozent und häufig nicht mehr als drei Prozent abweicht. Dieser Dauerschwingtest kann ein einachsiger oder zweiachsiger Dauerschwingtest sein und erstreckt sich i.d.R. über mindestens einen Tag, meistens über mindestens eine Woche und häufig über mindestens einen Monat.

Erfindungsgemäß werden zusätzlich Sensoren angebracht, die mit zeitlicher Auflösung Verlagerungen von verschiedenen Punkten des Rotorblatts insbesondere gegenüber einem ortsfesten Bezugssystem, in dem die Blattwurzel ruht, erfassen. Bei diesen Sensoren kann es sich beispielsweise um direkt an dem Rotorblatt angebrachte Beschleunigungs- oder Dehnungssensoren handeln. Die Sensoren können aber auch ortsfeste Abstandsensoren umfassen, die den Abstand des jeweiligen Punkts des Rotorblatts zu einem ortsfesten Bezugspunkt erfassen. Zu den Sensoren können auch optische Sensoren zählen, die beispielsweise die Lage optisch erkennbarer Punkte des Rotorblatts oder von an dem Rotorblatt angebrachten Markern im Raum erfassen. Diese optischen Sensoren können eine Stereokameraanordnung und/oder einen Projektor, der strukturiertes Licht auf das Rotorblatt projiziert, und/oder einen Scanner umfassen, der das Rotorblatt mit einem Laserstrahl abtastet. Die Punkte des Rotorblatts, deren Verlagerungen mit den Sensoren erfasst werden, können so ausgewählt werden, dass sie für erwartete Schwingungsformen des Rotorblatts repräsentativ sind.

Weiterhin wird das eingespannte Rotorblatt bei dem erfindungsgemäßen Verfahren nicht nur bei seiner einen Eigenfrequenz zu Schwingungen angeregt, sondern in einem mindestens einmal durchgeführten Modenscan mit einer Vielzahl unterschiedlicher Frequenzen. Diese unterschiedlichen Frequenzen sind insbesondere so zu wählen, dass damit jede interessierende Eigenfrequenz des Rotorblatts getroffen wird. Wenn dann erfindungsgemäß während des Modenscans die Verlagerungen der Punkte des Rotorblatts mit den Sensoren zeitaufgelöst erfasst werden, kann anhand des Zeitverlaufs der Verlagerungen zumindest erkannt werden, welche Eigenfrequenzen des Rotorblatts angeregt wurden. Zudem sind aus den Amplituden und relativen Phasen der Verlagerungen der einzelnen Punkte Rückschlüsse auf die Schwingungsformen des Rotorblatts möglich. So werden durch das erfindungsgemäße Verfahren relevante zusätzliche Daten zu dem Rotorblatt gewonnen. Hierfür sind apparativ allein die Sensoren vorzusehen, die die Verlagerung der Punkte des Rotorblatts erfassen. Verglichen mit dem Gesamtaufwand beim Testen eines Rotorblatts ist der damit verbundene Aufwand jedoch minimal.

Insbesondere können die unterschiedlichen Frequenzen, mit denen das Rotorblatt während des Modenscans angeregt wird, Frequenzen umfassen, die mindestens doppelt so groß sind wie die eine Eigenfrequenz des Rotorblatts, bei der der Dauerschwingungstest durchgeführt wird. Auch alle unterschiedlichen Frequenzen, die der Anregung mit der einen Eigenfrequenz des Rotorblatts während des Modenscans überlagert werden, können größer als diese eine Eigenfrequenz des Rotorblatts sein. Die Bandbreite der unterschiedlichen Frequenzen, mit denen das Rotorblatt während des Modenscans angeregt wird, beträgt mindestens 100 %, in der Regel mindestens 200 % und oft mindestens 300 % der kleinsten der unterschiedlichen Frequenzen.

Für das Anregen des Rotorblatts zu Schwingungen mit der Vielzahl unterschiedlicher Frequenzen kann hingegen regelmäßig derselbe Erreger eingesetzt werden, der auch in dem Dauerschwingtest zum Anregen des Rotorblatts mit der vorgegebenen Frequenz verwendet wird. Konkret kann es sich dabei um einen servohydraulischen Aktuator oder einen Unwuchterreger handeln. In beiden Fällen wird der Erreger über eine möglichst geringe Masse an das jeweilige Rotorblatt angekoppelt, um dessen Schwingungsformen möglichst wenig durch eine Veränderung seiner Masseverteilung zu beeinflussen. So wird ein Unwuchterreger möglichst nicht direkt, sondern über eine Feder an das Rotorblatt angekoppelt.

Der Modenscan kann auch separat von dem Dauerschwingtest durchgeführt werden. In jedem Fall wird er aber mehrfach während des laufenden Dauerschwingtests durchgeführt, Dabei werden die Anregungen mit den unterschiedlichen Frequenzen für die Dauer des Modenscans der Anregung mit der einen Eigenfrequenz des Rotorblatts überlagert. Bei Durchführung des Modenscans während des Dauerschwingtests können mit dem Modenscan auch solche Strukturveränderungen des Rotorblatts detektiert werden, die sich nur unter seiner Verformung während des Dauerschwingtests, beispielsweise im Bereich der maximalen Amplitude der Schwingungen des Rotorblatts bei seiner einen Eigenfrequenz zeigen.

Wenn die während des Modenscans erfassten Verlagerungen der Punkte des Rotorblatts den Anregungen mit den unterschiedlichen Frequenzen zeitlich zugeordnet werden, wird die Auswertung der Verlagerungen erleichtert. Weiterhin können die Kräfte erfasst werden, mit denen das Rotorblatt während des Modenscans mit den unterschiedlichen Frequenzen angeregt wird; und die während des Modenscans erfassten Verlagerungen der Punkte des Rotorblatts können auch diesen Kräften zugeordnet werden. Beide Zuordnungen sind aber keine Voraussetzung dafür, das mit dem erfindungsgemäßen Verfahren wesentliche zusätzliche Daten zu dem Rotorblatt gewonnen werden.

Um während des Modenscans die Schwingungsantwort des Rotorblatts in Form der Verlagerungen seiner von den Sensoren erfassten Punkte vollständig zu erfassen, d. h. alle hierin enthaltenen Informationen zu erlangen, sind die Sensoren mit einer Abfragefrequenz abzufragen oder Signale der Sensoren mit einer Abtastfrequenz abzutasten, die mindestens 2,5-mal, genauer gesagt mindestens 2,55-mal so groß ist wie eine höchste der unterschiedlichen Frequenzen, mit denen das Rotorblatt in dem Modenscan angeregt wird, oder zumindest wie eine höchste interessierende Eigenfrequenz des Rotorblatts. Mit dieser Abfrage bzw. Abtastfrequenz ist die Schwingungsantwort des Rotorblatts sowohl nach Amplitude als auch Phase auch bei der höchsten relevanten Frequenz ausreichend genau erfassbar.

Wie bereits angedeutet wurde, können aus den während des Modenscans erfassten Verlagerungen der Punkte des Rotorblatts Eigenfrequenzen und Schwingungsformen des Rotorblatts ermittelt werden. Dies kann insbesondere nach einer Methode der experimentellen Modalanalyse geschehen. Derartige Methoden sind dem Fachmann bekannt.

Der erfindungsgemäße Modenscan kann einmal vor dem Dauerschwingtest oder zu Beginn des Dauerschwingtests durchgeführt werden. Dann kann aus den Eigenfrequenzen, die aus den bei diesem Modenscan gewonnenen Daten ermittelt werden, die Eigenfrequenz ausgewählt werden, mit der das Rotorblatt in dem folgenden Dauerschwingtest angeregt wird.

Der Modenscan wird jeweils nach einem Teil des Dauerschwingtests wiederholt. Dann können die Verlagerungen der Punkte des Rotorblatts oder die daraus ermittelten Eigenfrequenzen und/oder Schwingungsformen von den verschiedenen Durchführungen des Modenscans miteinander verglichen werden. Wenn bei diesem Vergleich Unterschiede festgestellt werden, weisen diese auf Veränderungen bei der Struktur des Rotorblatts und damit auf Strukturfehler hin, die durch die zyklische Belastung des Rotorblatts hervorgerufen wurden. Für die Erkennung dieser Strukturfehler ist die Ermittlung der Unterschiede zwischen den Verlagerungen der Punkte des Rotorblatts und den daraus abgeleiteten Eigenfrequenzen und/oder Schwingungsformen bei den verschiedenen Durchführungen des Modenscans hoch empfindlich. D. h. solche Strukturfehler werden bei dem erfindungsgemäßen Verfahren bereits erkannt, bevor sich das allgemeine Schwingungsverhalten des Rotorblatts in dem Dauerschwingtest signifikant ändert.

In dem Modenscan kann das Rotorblatt konkret mit einer Kraft und/oder einer Auslenkung, die einem Zufallssignal oder einem Gleitsignal folgt, zu den Schwingungen angeregt werden. Mit einem Gleitsinus oder einem Chirp wird eine Funktion mit über der Zeit zu- oder abnehmender Frequenz verstanden, bei der jede Frequenz zwischen einer Minimalfrequenz und einer Maximalfrequenz vorkommt. Dabei bleibt die Amplitude der Funktion i.d.R. konstant. Sie kann aber zu Beginn und/oder zum Ende des Gleitsinus oder Chirps bei null beginnend stetig ansteigen bzw. stetig bis auf null abfallen. Bei einem Zufallssignal, d. h. einem weißen Rauschen ist dafür zu sorgen, dass der interessierende Frequenzbereich abgedeckt wird und dass trotz der zufälligen Abfolge der unterschiedlichen Frequenzen, mit denen das Rotorblatt angeregt wird, die Verlagerungen des Rotorblatts der zugehörigen Frequenz der Anregung zugeordnet werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Sensor die Rede ist, ist dies so zu verstehen, dass genau ein Sensor, zwei Sensoren oder mehr Sensoren vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig.** 1: zeigt einen Prüfstand für ein Rotorblatt zur Durchführung des erfindungsgemäßen Verfahrens.
- **Fig.** 2: ist ein Blockdiagramm einer kompletten Ausführungsform des erfindungsgemäßen Verfahrens.
- **Fig. 3**: ist ein Blockdiagramm eines Modenscans bei dem erfindungsgemäßen Verfahren.
- **Fig. 4**: ist ein Blockdiagramm einer weiteren kompletten Ausführungsform des erfindungsgemäßen Verfahrens; und
- **Fig. 5**: zeigt verschiedene Eingangssignale eines Erregers bei der Ausführungsform des erfindungsgemäßen Verfahrens gemäß Fig. 4.

### FIGURENBESCHREIBUNG

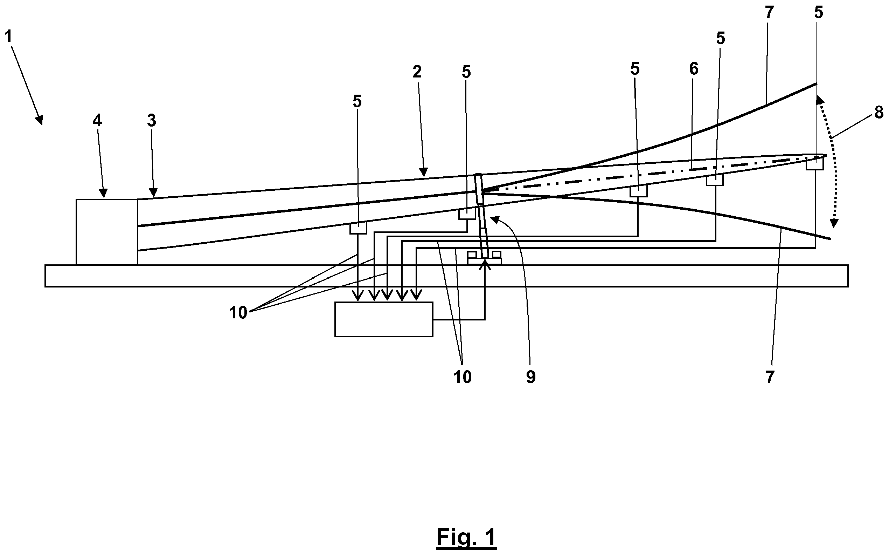

In dem in **Fig.** 1 schematisch dargestellten Prüfstand 1 für ein Rotorblatt 2 ist das Rotorblatt an seiner Blattwurzel 3 fest an einem Sockel 4 befestigt, d. h. eingespannt. An dem Rotorblatt 2 sind über seine Länge verteilt Sensoren 5 angeordnet, bei denen es sich hier um Beschleunigungssensoren handelt, und die Verlagerungen des Rotorblatts 2 bei Schwingungen des Rotorblatts 2 erfassen. In Fig. 1 ist eine Hauptachse 6 des Rotorblatts 2 mit strichpunktierter Linie gezeigt. Mit durchgezogenen Linien 7 ist die Auslenkung dieser Hauptachse, d. h. die Amplitude dieser Schwingungen in Richtung eines Doppelpfeils 8 dargestellt. Diese Schwingungen werden mit Hilfe eines Erregers 9 angeregt, bei dem es sich hier um einen servohydraulischen Aktuator handelt. Der Erreger 9 gibt auch die Richtung der Verlagerungen des Rotorblatts 2 bei den Schwingungen vor. So kann der Erreger 9 das Rotorblatt 2 in Schlagrichtung und/oder in Schwenkrichtung zu den Schwingungen anregen. Für einen Dauerschwingtest erfolgt diese Anregung mit einer vorgegebenen Frequenz, die auf eine Eigenfrequenz des Rotorblatts 2 eingestellt ist, um den Energiebedarf für den Dauerschwingtest zu minimieren. Vor dem Dauerschwingtest und in Unterbrechungen oder während des Dauerschwingtests wird das Rotorblatt 2 zusätzlich mit demselben Erreger 9 und insbesondere auch in derselben Richtung wie bei dem Dauerschwingtest in einem Modenscan mit einer Vielzahl unterschiedlicher Frequenzen zu Schwingungen angeregt. Dabei werden während des Modenscans die Verlagerungen der Punkte des Rotorblatts 2, in denen die Sensoren 5 angebracht sind, mit den Sensoren 5 erfasst und den unterschiedlichen Frequenzen der Anregung zugeordnet. Um die Verlagerungen der Punkte des Rotorblatts 2, in dem die Sensoren 5 angebracht sind, nach Frequenz, Amplitude und Phase vollständig aufzulösen, werden die Sensoren 5 während des Modenscans mit einer Abfragefrequenz abgefragt oder ihre Signale 10 werden mit einer Abtastfrequenz abgetastet, die 2,55-mal so groß ist wie eine höchste der unterschiedlichen Frequenzen der Anregung oder eine höchste interessierende Eigenfrequenz des Rotorblatts 2. Aus den erfassten Verlagerungen werden Eigenfrequenzen und Schwingungsformen des Rotorblatts 2 nach einer Methode der experimentellen Modalanalyse ermittelt. Wenn hierbei Veränderungen der Eigenfrequenzen oder Schwingungsformen gegenüber den zuletzt ermittelten Eigenfrequenzen und Schwingungsformen festgestellt werden, ist dies ein starkes Indiz dafür, dass sich das Rotorblatt 2 während des Dauerschwingtests verändert hat, was generell als Auftreten eines Strukturfehlers zu werten ist.

Mit Hilfe des Modenscans, der von einer Steuerung 11 in regelmäßigen Abständen während des Dauerschwingtests durchgeführt werden kann, lassen sich also nicht nur Eigenfrequenzen und Schwingungsformen des Rotorblatts 2 bestimmen, um beispielsweise ein elastisches Modell des Rotorblatts 2 zu validieren, sondern auch während des Dauerschwingtests auftretende Strukturfehler sehr schnell detektieren. Der sehr aufwändige und zeitintensive Dauerschwingtest kann so im Falle des Auftretens von Strukturfehlern frühzeitig abgebrochen werden, um den Prüfstand 1 für den Test eines anderen Rotorblatts 2 zu nutzen.

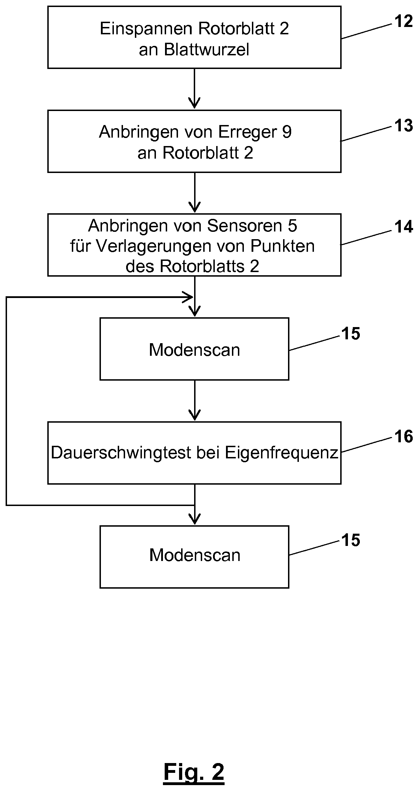

Das in **Fig.** 2 dargestellte Blockdiagramm einer vollständigen Ausführungsform des erfindungsgemäßen Verfahrens beginnt mit einem Schritt 12 des Einspannens des Rotorblatts 2 an seiner Blattwurzel 3. In einem Schritt 13 folgt das Anbringen des Erregers 9 an dem Rotorblatt 2. In einem Schritt 14 werden zusätzlich die Sensoren 5, die Verlagerungen von Punkten des Rotorblatts 2 erfassen, an dem Rotorblatt 2 angebracht. Anschließend wird ein erster Modenscan 15 durchgeführt. Danach beginnt der Dauerschwingtest 16 bei einer Eigenfrequenz des Rotorblatts. Der Dauerschwingtest wird immer wieder für einen weiteren Modenscan 15 unterbrochen, bis am Ende des Verfahrens ein abschließender Modenscan 15 erfolgt.

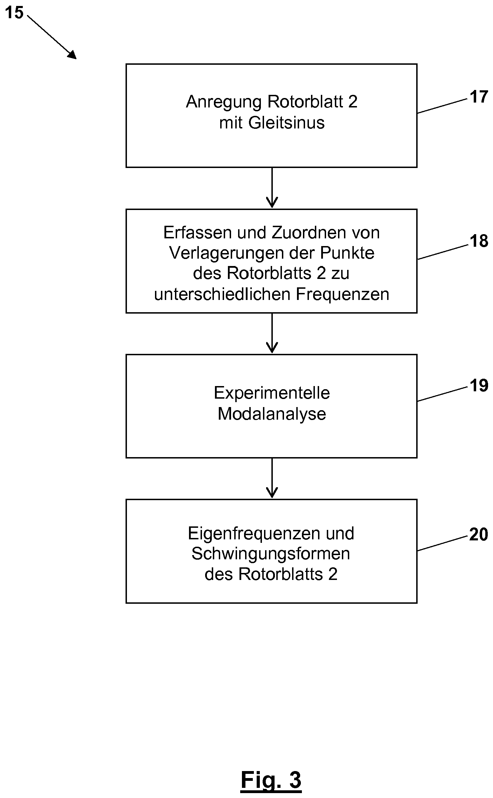

Gemäß **Fig. 3** wird in jedem Modenscan 15 das Rotorblatt mit unterschiedlichen Frequenzen zu Schwingungen angeregt, beispielsweise indem in einem Schritt 17 eine Anregung des Rotorblatts 2 mit einem Gleitsinus erfolgt. Dabei erfolgt in einem Schritt 18 ein Erfassen und Zuordnen von Verlagerungen der Punkte des Rotorblatts 2 zu den unterschiedlichen Frequenzen der Anregung, und zwar unter Auflösung einer Phasenlage der Verlagerungen gegenüber der Anregung. Hierauf basiert die experimentelle Modalanalyse 19, deren Ergebnisse 20 die Eigenfrequenzen und Schwingungsformen des Rotorblatts 2 sind.

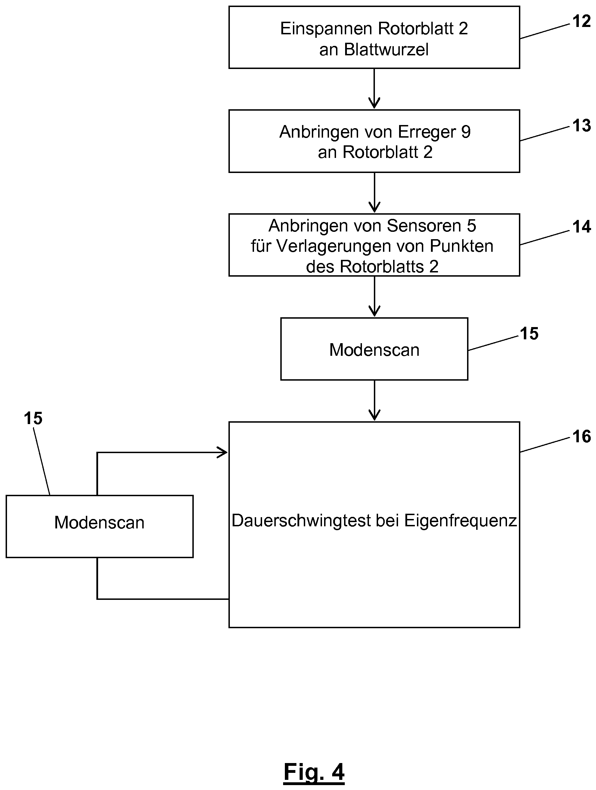

Bei der in **Fig. 4** in Form eines Blockdiagramms skizzierten Ausführungsform des erfindungsgemäßen Verfahrens wird nach dem anfänglichen Modenscan 15 zur Ermittlung der einen Eigenfrequenz des Rotorblatts für den Dauerschwingtest 18 der Dauerschwingtest 16 für die Wiederholungen des Modenscans 15 nicht unterbrochen. Vielmehr wird die Anregung des Rotorblatts 2 mit den unterschiedlichen Frequenzen während des Modenscans 15 der Anregung der einen Eigenfrequenz des Rotorblatts 2 während des Dauerschwingtests 16 überlagert.

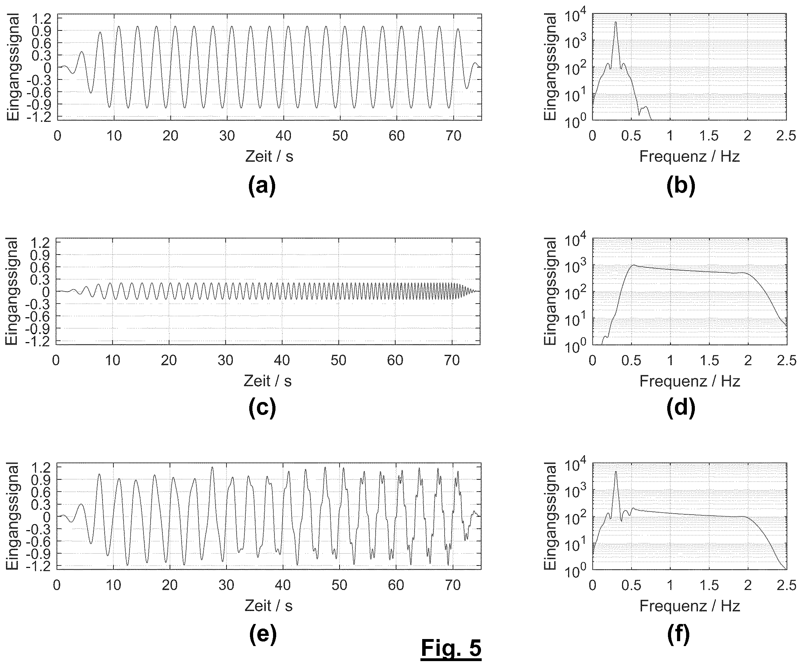

**Fig. 5** zeigt die Eingangssignale, die dabei dem Erreger 9 zugeführt werden. Konkret zeigt Fig. 5(a) ein stationäres Sinussignal mit der einen Eigenfrequenz des Rotorblatts 2 im Zeitbereich, und Fig. 5 (b) zeigt dasselbe Sinussignal im Frequenzbereich. Im Frequenzbereich gemäß Fig. (b) zeigt sich im Wesentlichen ein Peak. Fig. 5 (c) zeigt ein Gleitsinussignal zur Anregung des Rotorblatts 2 während des Modenscans 15 im Zeitbereich. Fig. 5 (d) zeigt das Gleitsinussignal im Frequenzbereich. Fig. 5 (e) ist die Überlagerung des Gleitsinussignals gemäß Fig. 5 (c) mit dem stationären Sinussignal gemäß Fig. 5 (a) im Zeitbereich. Fig. 5 (f) zeigt dieselbe Überlagerung im Frequenzbereich. In dem Beispiel gemäß Fig. 5 weist das stationäre Sinussignal eine Frequenz von 0,3 Hz auf, während das Gleitsinussignal einen Bereich von 0,5 bis 2,0 Hz abdeckt. Trotz der deutlich kleineren Amplitude des Gleitsinussignals reicht dieses aus, um die Anregung der Struktur des Rotorblatts 2 bei allen Frequenzen zwischen 0,5 und 2,0 Hz zu garantieren.

### BEZUGSZEICHENLISTE

- 1: Prüfstand
- 2: Rotorblatt
- 3: Blattwurzel
- 4: Sockel
- 5: Sensor
- 6: Hauptachse
- 7: Durchgezogene Linie
- 8: Doppelpfeil
- 9: Erreger
- 10: Signal
- 11: Steuerung
- 12: Einspannen Rotorblatt
- 13: Anbringen Erreger
- 14: Anbringen Sensoren
- 15: Modenscan
- 16: Dauerschwingtest
- 17: Anregung Rotorblatt mit Gleitsinus
- 18: Erfassung und Zuordnung von Verlagerungen
- 19: Experimentelle Modalanalyse
- 20: Ergebnisse

## Patentansprüche

1. Verfahren zur Gewinnung von Daten zu einem Rotorblatt (2) für eine Windenergieanlage,
- wobei das Rotorblatt (2) an seiner Blattwurzel (3) eingespannt wird;
- wobei Sensoren (5) angebracht werden, die zeitaufgelöst Verlagerungen von verschiedenen Punkten des Rotorblatts (2) erfassen,
- wobei das eingespannte Rotorblatt (2) mindestens einmal in einem Modenscan (15) nacheinander mit einer Vielzahl unterschiedlicher Frequenzen zu Schwingungen angeregt wird,
- wobei während des Modenscans die Verlagerungen der Punkte des Rotorblatts (2) mit den Sensoren (5) zeitaufgelöst erfasst werden,
- wobei das eingespannte Rotorblatt (2) in einem Dauerschwingtest (16) mit einer vorgegebenen Frequenz zu Schwingungen angeregt wird,
- wobei die vorgegebene Frequenz auf eine Eigenfrequenz des Rotorblatts (2) eingestellt wird und
- wobei das Rotorblatt (2) auf Beschädigungen in dem Dauerschwingtest (16) untersucht wird,
**dadurch gekennzeichnet,**
- **dass** der Modenscan (15) während des laufenden Dauerschwingtests (16) mehrfach durchgeführt wird,
- wobei zwischen den Durchführungen des Modenscans (15) zumindest ein Teil des Dauerschwingtests (16) durchgeführt wird und
- wobei die Anregungen mit den unterschiedlichen Frequenzen während des Modenscans (15) der Anregung mit der einen Eigenfrequenz des Rotorblatts (2) überlagert werden.

2. Verfahren nach Anspruch 1, **dadurch gekennzeichnet, dass** der Modenscan (15) in regelmäßigen Abständen während des Dauerschwingtests (16) durchgeführt wird.

3. Verfahren nach Anspruch 1 oder 2, **dadurch gekennzeichnet, dass** die unterschiedlichen Frequenzen, mit denen das Rotorblatt (2) während des Modenscans (15) angeregt wird, Frequenzen umfassen, die mindestens doppelt so groß sind wie die eine Eigenfrequenz des Rotorblatts (2).

4. Verfahren nach einem der vorhergehenden Ansprüche, **dadurch gekennzeichnet, dass** die während des Modenscans (15) erfassten Verlagerungen der Punkte des Rotorblatts (2) den Anregungen mit den unterschiedlichen Frequenzen zeitlich zugeordnet werden.

5. Verfahren nach einem der vorhergehenden Ansprüche, **dadurch gekennzeichnet, dass** die Kräfte erfasst werden, mit denen das Rotorblatt (2) während des Modenscans (15) mit den unterschiedlichen Frequenzen angeregt wird.

6. Verfahren nach einem der vorhergehenden Ansprüche, **dadurch gekennzeichnet, dass** während des Modenscans (15) die Sensoren (5) mit einer Abfragefrequenz abgefragt oder Signale (10) der Sensoren (5) mit einer Abtastfrequenz abgetastet werden, die mindestens 2,5-mal so groß ist wie eine höchste der unterschiedlichen Frequenzen oder eine höchste interessierende Eigenfrequenz des Rotorblatts (2).

7. Verfahren nach einem der vorhergehenden Ansprüche, **dadurch gekennzeichnet, dass** aus den während des Modenscans (15) erfassten Verlagerungen der Punkte des Rotorblatts (2) Eigenfrequenzen und Schwingungsformen des Rotorblatts (2) ermittelt werden.

8. Verfahren nach Anspruch 7, **dadurch gekennzeichnet, dass** die Eigenfrequenzen und Schwingungsformen des Rotorblatts (2) nach einer Methode der experimentellen Modalanalyse aus den während des Modenscans (15) erfassten Verlagerungen der Punkte des Rotorblatts (2) ermittelt werden.

9. Verfahren nach einem der vorhergehenden Ansprüche, **dadurch gekennzeichnet, dass** der Modenscan einmal vor dem Dauerschwingtest oder zu Beginn des Dauerschwingtests (16) durchgeführt wird.

10. Verfahren nach Anspruch 9, **dadurch gekennzeichnet, dass** die eine Eigenfrequenz des Rotorblatts (2) mit der das Rotorblatt (2) in dem Dauerschwingtest (16) angeregt wird, aus den während des vorherigen Modenscans (15) erfassten Verlagerungen der Punkte des Rotorblatts (2) ermittelt wird.

11. Verfahren nach einem der vorhergehenden Ansprüche, **dadurch gekennzeichnet, dass** die Eigenfrequenzen und/oder die Schwingungsformen, die aus den während der aufeinander folgenden Durchführungen des Modenscans erfassten Verlagerungen der Punkte des Rotorblatts (2) ermittelt wurden, miteinander verglichen werden.

12. Verfahren nach einem der vorhergehenden Ansprüche, **dadurch gekennzeichnet, dass** sich der Dauerschwingtest über mindestens einen Tag, eine Woche oder einen Monat erstreckt.

13. Verfahren nach einem der vorhergehenden Ansprüche, **dadurch gekennzeichnet, dass** das Rotorblatt (2) mit einem servohydraulischen Aktuator und/oder einem Unwuchterreger zu den Schwingungen angeregt wird.

14. Verfahren nach einem der vorhergehenden Ansprüche, **dadurch gekennzeichnet, dass** das Rotorblatt (2) in dem Modenscan mit einer Kraft und/oder Auslenkung, die einem Zufallssignal oder einem Gleitsinus folgt, zu den Schwingungen angeregt wird.

15. Verfahren nach einem der vorhergehenden Ansprüche, **dadurch gekennzeichnet, dass** die Sensoren (5) aus
- ortsfesten Abstandssensoren,
- ortsfesten optischen Sensoren, optional kombiniert mit an dem Rotorblatt (2) anzubringenden Markern,
- an dem Rotorblatt (2) anzubringenden Beschleunigungssensoren und
- an dem Rotorblatt (2) anzubringenden Dehnungssensoren
ausgewählt werden.

## Claims

1. Method of obtaining data related to a rotor blade (2) for a wind turbine,
- wherein the rotor blade (2) is mounted at its blade root (3);
- wherein sensors (5) are attached that register displacements of several points of the rotor blade (2) with temporal resolution,
- wherein the mounted rotor blade (2) is at least once excited for vibrations at a plurality of different frequencies one after the other in a mode scan (1),
- wherein, during the mode scan, the displacements of the points of the rotor blade (2) are registered by the sensors (5) with temporal resolution,
- wherein the mounted rotor blade (2) is excited for vibrations at one predetermined frequency in a long term vibration test,
- wherein the predetermined frequency is adjusted to an eigenfrequency of the rotor blade (2), and
- wherein the rotor blade (2) is examined for damages in the long term vibration test (16),
**characterized in**
- **that** the mode scan (15) is executed several times during the running long term vibration test (16),
- wherein, between the executions of the mode scan (15), at least a part of the long term vibration test (16) is executed, and
- wherein the excitations at the different frequencies during the mode scan (15) are superimposed with the excitation at the one eigenfrequency of the rotor blade (2).

2. Method of claim 1, **characterized in that** the mode scan (15) is executed at regular intervals during the long term vibration test (16).

3. Method of claim 1 or 2, **characterized in that** the different frequencies, at which the rotor blade (2) is excited during the mode scan (15), include frequencies that are at least twice as high as the one eigenfrequency of the rotor blade (2).

4. Method of any of the preceding claims, **characterized in that** the displacements of the points of the rotor blade (2) which are registered during the mode scan (15) are temporally assigned to the excitation at the different frequencies.

5. Method of any of the preceding claims, **characterized in that** the forces are measured by which the motor blade (2) is excited during the mode scan (15) at the different frequencies.

6. Method of any of the preceding claims, **characterized in that**, during the mode scan (15), the sensors (5) are sampled at a sampling frequency, or signals (10) of the sensors (5) are sample at a sampling frequency that is at least 2.5 times as high as a highest one of the different frequencies or a highest eigenfrequency of interest of the rotor blade (2).

7. Method of any of the preceding claims, **characterized in that** eigenfrequencies and modes of vibrations of the rotor blade (2) are determined from the displacements of the points of the rotor blade (2) registered during the mode scan (15).

8. Method of claim 7, **characterized in that** the eigenfrequencies and the modes of vibration of the rotor blade (2) are determined from the displacements of the points of the rotor blade (2) registered during the mode scan (15) according to a method of experimental modal analysis.

9. Method of any of the preceding claims, **characterized in that** the mode scan is executed once prior to the long term vibration test or at the beginning of the long term vibration test (16).

10. Method of claim 9, **characterized in that** the one eigenfrequency of the rotor blade (2) at which the rotor blade (2) is excited in the long term vibration test (16) is determined from the displacements of the points of the rotor blade (2) registered during the previous mode scan (15).

11. Method of any of the preceding claims, **characterized in that** the eigenfrequencies and/or the modes of vibration that are determined from the displacements of the points of the rotor blade (2) during the consecutive executions of the mode scan are compared to each other.

12. Method of any of the preceding claims, **characterized in that** the long term vibration test extends over at least one day, one week, or one month.

13. Method of any of the preceding claims, **characterized in that** the rotor blade (2) is excited for vibrations with a hydraulic servo actuator and/or an unbalanced mass exciter.

14. Method of any of the preceding claims, **characterized in that** the rotor blade (2), in the mode scan, is excited for vibrations by means of a force and/or displacement that follows a random signal or a sine sweep signal.

15. Method of any of the preceding claims, **characterized in that** the sensors are selected from
- locally fixed distance sensors,
- locally fixed optical sensors, optionally combined with markers to be attached to the rotor blade (2),
- acceleration sensors to be attached to the rotor blade (2), and
- strain gauges to be attached to the rotor blade (2).

## Revendications

1. Procédé d'obtention de données concernant une pale de rotor (2) pour une éolienne,
- dans lequel la pale de rotor (2) est serrée au niveau de son pied de pale (3) ;
- dans lequel il est mis en place des capteurs (5) qui détectent, avec une résolution temporelle, des déplacements de différents points de la pale de rotor (2),
- dans lequel la pale de rotor (2) serrée est excitée en oscillations au moins une fois dans un scan modal (15) successivement avec une pluralité de différentes fréquences,
- dans lequel, pendant le scan modal, les déplacements des points de la pale de rotor (2) sont détectés avec les capteurs (5) avec une résolution temporelle,
- dans lequel la pale de rotor (2) serrée est excitée en oscillations dans un essai sous oscillation continue (16) avec une fréquence prédéfinie,
- dans lequel la fréquence prédéfinie est réglée à une fréquence propre de la pale de rotor (2) et
- dans lequel la pale de rotor (2) est examinée à la recherche d'endommagements dans l'essai sous oscillation continue (16),
**caractérisé en ce que**
- le scan modal (15) est effectué plusieurs fois au cours de l'essai sous oscillation continue (16),
- dans lequel au moins une partie de l'essai sous oscillation continue (16) est effectuée entre les réalisations du scan modal (15) et
- dans lequel les excitations avec les différentes fréquences sont pendant le scan modal (15) superposées à l'excitation avec la propre fréquence de la pale de rotor (2).

2. Procédé selon la revendication 1, **caractérisé en ce que** le scan modal (15) est effectué à intervalles réguliers pendant l'essai sous oscillation continue (16).

3. Procédé selon la revendication 1 ou 2, **caractérisé en ce que** les différentes fréquences avec lesquelles la pale de rotor (2) est excitée pendant le scan modal (15) comprennent des fréquences qui sont au moins deux fois plus grandes que la fréquence propre de la pale de rotor (2).

4. Procédé selon l'une des revendications précédentes, **caractérisé en ce que** les déplacements des points de la pale de rotor (2) détectés pendant le scan modal (15) sont affectés temporellement aux excitations avec les différentes fréquences.

5. Procédé selon l'une des revendications précédentes, **caractérisé en ce que** les forces avec lesquelles la pale de rotor (2) est excitée pendant le scan modal (15) avec les différentes fréquences sont détectées.

6. Procédé selon l'une des revendications précédentes, **caractérisé en ce que,** pendant le scan modal (15), les capteurs (5) sont interrogés avec une fréquence d'interrogation, ou des signaux (10) des capteurs (5) sont explorés avec une fréquence d'exploration qui est au moins 2,5 fois plus grande qu'une fréquence la plus élevée des différentes fréquences ou qu'une fréquence propre intéressante la plus élevée de la pale de rotor (2).

7. Procédé selon l'une des revendications précédentes, **caractérisé en ce que** des fréquences propres et des formes d'oscillation de la pale de rotor (2) sont déterminées à partir des déplacements des points de la pale de rotor (2) détectés pendant le scan modal (15).

8. Procédé selon la revendication 7, **caractérisé en ce que** les fréquences propres et les formes d'oscillation de la pale de rotor (2) sont déterminées selon une méthode de l'analyse modale expérimentale à partir des déplacements des points de la pale de rotor (2) détectés pendant le scan modal (15).

9. Procédé selon l'une des revendications précédentes, **caractérisé en ce que** le scan modal est effectué une fois avant l'essai sous oscillation continue ou au début de l'essai sous oscillation continue (16).

10. Procédé selon la revendication 9, **caractérisé en ce que** la fréquence propre de la pale de rotor (2) avec laquelle la pale de rotor (2) est excitée dans l'essai sous oscillation continue (16) est déterminée à partir des déplacements des points de la pale de rotor (2) détectés pendant le scan modal (15) précédent.

11. Procédé selon l'une des revendications précédentes, **caractérisé en ce que** les fréquences propres et/ou les formes d'oscillation qui ont été déterminées à partir des déplacements des points de la pale de rotor (2) détectés pendant les réalisations successives du scan modal sont comparées les unes aux autres.

12. Procédé selon l'une des revendications précédentes, **caractérisé en ce que** l'essai sous oscillation continue s'étend sur au moins une journée, une semaine ou un mois.

13. Procédé selon l'une des revendications précédentes, **caractérisé en ce que** la pale de rotor (2) est excitée en oscillations avec un actionneur servo-hydraulique et/ou un excitateur à balourd.

14. Procédé selon l'une des revendications précédentes, **caractérisé en ce que,** dans le scan modal, la pale de rotor (2) est excitée en oscillations avec une force et/ou une déflexion qui suit un signal aléatoire ou un sinus balayé.

15. Procédé selon l'une des revendications précédentes, **caractérisé en ce que** les capteurs (5) sont sélectionnés parmi
- des capteurs de distance stationnaires,
- des capteurs optiques stationnaires, combinés optionnellement avec des marqueurs à mettre en place sur la pale de rotor (2),
- des capteurs d'accélération à mettre en place sur la pale de rotor (2),
- des capteurs de dilatation à mettre en place sur la pale de rotor (2).
